**Europäisches Patentamt**

**European Patent Office**

**Office européen des brevets**

(11) Veröffentlichungsnummer : **0 017 750**
**B1**

(12) **EUROPÄISCHE PATENTSCHRIFT**

(45) Veröffentlichungstag der Patentschrift :
15.12.82

(51) Int. Cl.³ : **B 60 R  1/06**

(21) Anmeldenummer : **80101176.8**

(22) Anmeldetag : **07.03.80**

(54) **Aussenrückblickspiegel für Fahrzeuge wie PKW.**

(30) Priorität : **06.04.79 DE 2913882**

(43) Veröffentlichungstag der Anmeldung :
**29.10.80 (Patentblatt 80/22)**

(45) Bekanntmachung des Hinweises auf die Patenterteilung : **15.12.82 Patentblatt 82/50**

(84) Benannte Vertragsstaaten :
**BE CH DE FR GB IT LU NL SE**

(56) Entgegenhaltungen :
**DE A 2 256 230**
**DE A 2 460 414**
**DE U 7 723 982**
**DE U 7 729 371**
**DE U 7 829 089**
**FR A 2 320 212**
**US A 2 644 363**
**US A 3 565 033**

(73) Patentinhaber : **Metallwerk FRESE GmbH**
**Moltkestrasse 25**
**D-5653 Leichlingen (DE)**

(72) Erfinder : **Drewermann, Rolf**
**Am Herrenbusch 50**
**D-5810 Witten 3 (DE)**

(74) Vertreter : **Gille, Christian, Dipl.-Ing. et al**
**Redies, Redies, Türk & Gille, Patentanwälte**
**Brucknerstrasse 20**
**D-4000 Düsseldorf 13 (DE)**

## Außenrückblickspiegel für Fahrzeuge wie PKW

Die Erfindung betrifft einen für Fahrzeuge wie PKW bestimmten Außenrückblickspiegel mit abklappbar an einem Halter angebrachtem Gehäuse, in dem eine an einer Fassung angebrachte Spiegelscheibe mittels eines Kugelgelenkes um eine senkrechte und eine horizontale Achse verstellbar angeordnet ist, und mit einem im Halter kugelig gelagerten Stellgestänge, welches ein die Abklappbewegungen des Gehäuses mitmachendes Gelenk enthält und mit seinem einen Ende mit der Fassung der Spiegelscheibe verbunden ist und am anderen Ende einen Stellgriff aufweist, wobei das Gelenk gegenüber dem Halter in Richtung einer den Stellgriff aufweisenden Stange des Stellgestänges verschiebbar ist.

Bei einem bekannten Außenrückblickspiegel dieser Art (DE-U-77 23 982) besteht das Stellgestänge im wesentlichen aus zwei über ein Scharniergelenk miteinander verbundenen Armen, wobei der eine Arm plattenförmig ausgebildet und auf der Rückseite der Fassung für die Spiegelscheibe verschiebbar gelagert ist. Dabei ist jedoch ein Verkanten des verschiebbar gelagerten Armes in der Führung nicht auszuschließen, ebensowenig wie auf die Dauer eine Verschmutzung der Führung vermieden werden kann, so daß sich Verstellbewegungen mit der Zeit ein immer stärkerer Widerstand entgegensetzt.

Bei einem anderen bekannten Außenrückblickspiegel der eingangs genannten Art (DE-U-77 29 371) sind die beiden Arme des Stellgestänges mittels eines Schiebegelenkes untereinander verbunden, wobei der an der Fassung der Spiegelscheibe befestigte eine Arm einen Gelenkzapfen und der im Halter gelagerte Verstellhebel mit einem Langloch für diesen Zapfen versehen ist. Eine genaue Führung des Zapfens im Langloch läßt sich nicht erreichen, so daß ein derartiges Stellgestänge verhältnismäßig viel Spiel hat und daher nicht genau genug betätigt werden kann.

Der Erfindung liegt die Aufgabe zugrunde, einen Außenrückblickspiegel mit abklappbarem Gehäuse und darin verstellbar angeordneter Spiegelscheibe zu schaffen, bei dem eine spielfreie und exakte Verstellung der Spiegelscheibe gewährleistet ist.

Diese Aufgabe wird erfindungsgemäß bei einem Außenrückblickspiegel der eingangs genannten Gattung dadurch gelöst, daß die den Stellgriff aufweisende Stange des Gestänges durch eine im Halter verdrehbar gelagerte Kugel axial verschiebbar hindurchgeführt ist. Diese einfache Konstruktion gewährleistet die beim Abklappen des Gehäuses erforderlichen Lageveränderungen des Stellgestänges, ohne daß ein Längenausgleich im Stellgestänge selbst oder an der Fassung der Spiegelscheibe notwendig wäre. Andererseits hat das Stellgestänge auch den notwendigen Halt, insbesondere wenn seine den Stellgriff aufweisende Stange mit leichter Reibung in der Kugel geführt ist.

Die Kugel enthält zweckmäßig eine sich nach beiden Seiten erweiternde Bohrung, so daß die Stange nur im mittleren Bereich der Kugel geführt ist und leicht durch die Kugel hindurchgesteckt und gegenüber der Kugel auch bis zu einem gewissen Grade verschwenkt werden kann.

Im Gegensatz zu bekannten Außenrückblickspiegeln ist beim erfindungsgemäßen Außenrückblickspiegel das Gelenk selbst spielfrei ausgebildet und in einem festen Abstand zur Fassung der Spiegelscheibe angeordnet, so daß der notwendige Längenausgleich des Stellgestänges zwischen seinem Gelenk und dem zur Verstellung dienenden Handgriff durch Verschiebung des Gelenkes selbst vorgenommen wird. Das so ausgebildete Stellgestänge ist daher sehr zuverlässig und wenig störanfällig und läßt sich auch noch nach längerem Gebrauch zuverlässig und leicht betätigen.

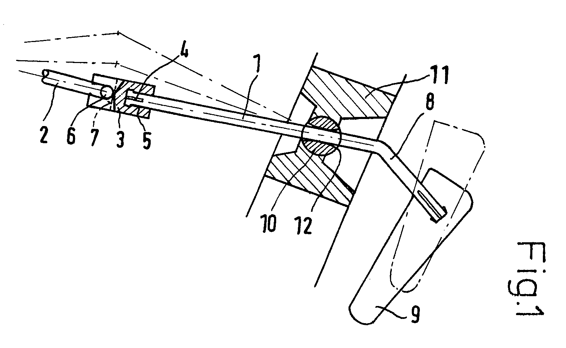

Gemäss einem in der Zeichnung dargestellten Ausführungsbeispiel des erfindungsgemäßen Außenrückblickspiegels besteht das Stellgestänge für die nicht dargestellte Fassung der Spiegelscheibe aus zwei Stangen 1 und 2, die über eine Fassung 3 miteinander verbunden sind. Die Stange 1 steckt mit ihrem einen durch einen Längsschlitz 4 etwas federnd nachgiebig ausgebildeten Ende 5 in der einen Seite dieser Fassung 3, während in die gegenüberliegende Seite der Fassung 3 die Stange 2 mit einem senkrecht verlaufenden Zapfen 6 eingesteckt ist. Die Fassung 3 enthält in Höhe der Stange 2 einen von einem Ende ausgehenden Schlitz 7, so daß seitliche Schwenkbewegungen der Stange 2 um den Zapfen 6 gegenüber der Fassung 3 nicht behindert werden und dementsprechend das Gelenk je nach der gewünschten Lage der zu verstellenden Spiegelscheibe seitlich auswandern kann.

Die Stange 1, welche an ihrem abgewinkelten äußeren Ende 8 einen Handgriff 9 trägt, ist in einer Kugel 10 axial verschiebbar geführt, die drehbar in einem Halter 11 gelagert ist. Dieser Halter 11 kann jede geeignete Form aufweisen und ist dazu bestimmt, den gesamten Außenrückblickspiegel an der Karosserie eines Fahrzeuges zu befestigen, zu welchem Zweck er in Teile der Karosserie eingesteckt oder eingelassen wird.

Die Kugel 10 enthält eine zentrale durchgehende Bohrung 12 für die Stange 1, welche sich nach ihren beiden Enden leicht konisch erweitert, so daß die Stange 1 nur im mittleren Bereich mit leichtem Reibungsschluß an der Wandung der Bohrung 12 anliegt. Die Stange 1 kann sich dabei in der Kugel 10 bei allen Verstellbewegungen des Gestänges um mehr oder weniger große Strecken verschieben, behält jedoch ihre jeweils eingestellte Lage aufgrund des Reibungsschlusses zwischen Stange und Kugel.

## Ansprüche

1. Außenrückblickspiegel für Fahrzeuge wie PKW, mit abklappbar an einem Halter (11) angebrachtem Gehäuse, in dem eine an einer Fassung angebrachte Spiegelscheibe mittels eines Kugelgelenkes um eine senkrechte und eine horizontale Achse verstellbar angeordnet ist, und mit einem im Halter (11) kugelig gelagerten Stellgestänge (1, 2), welches ein die Abklappbewegungen des Gehäuses mitmachendes Gelenk (3, 6) enthält und mit seinem einen Ende mit der Fassung der Spiegelscheibe verbunden ist und am anderen Ende einen Stellgriff (9) aufweist, wobei das Gelenk (3, 6) gegenüber dem Halter (11) in Richtung einer den Stellgriff (9) aufweisenden Stange (1) des Stellgehäuses verschiebbar ist, dadurch gekennzeichnet, daß die den Stellgriff (9) aufweisende Stange (1) des Stellgestänges (1, 2) durch eine im Halter (11) verdrehbar gelagerte Kugel (10) axial verschiebbar hindurchgeführt ist.

2. Außenrückblickspiegel nach Anspruch 1, dadurch gekennzeichnet, daß die den Stellgriff (9) aufweisende Stange (1) des Stellgestänges in der Kugel (10) mit leichter Reibung geführt ist.

3. Außenrückblickspiegel nach Anspruch 2, dadurch gekennzeichnet, daß die Kugel (10) eine sich nach beiden Seiten erweiternde Bohrung (12) für die Stange (1) enthält.

## Claims

1. Outside rear view mirror for vehicles, for instance passenger cars, comprising a casing collapsably fixed to a support (11), said casing comprising a mirror in a frame adjustable by means of a ball articulation around a vertical and horizontal axis, and an adjustment rod (1, 2) ball-borne in said support (11) comprising an articulation (3, 6) following the downward movements of the casing, one end of which is connected to the mirror frame while the other end carries an adjustment knob (9), said articulation (3, 6) being slidable with respect to support (11) towards rod (1) of the adjustment casing carrying the adjustment knob (9), characterized in that rod (1) carrying the adjustment knob (9) is guided axially slidable through a ball (10) rotably supported in support (11).

2. Outside rear view mirror as defined in claim 1, characterized in that rod (1) carrying the adjustment knob (9) is guided slightly frictional in ball (10).

3. Outside rear view mirror as defined in claim 2, characterized in that ball (10) comprises a bilaterally opening bore (12) for receiving rod (1).

## Revendications

1. Rétroviseur extérieur pour véhicules, par exemple voitures de tourisme, composé d'un boîtier articulé sur un support (11), le boîtier comprenant une glace disposée dans un cadre, la glace étant verticalement et horizontalement orientable autour d'un axe au moyen d'une rotule, et comprenant également un tirant de réglage (1, 2) rotulé dans le support (11) et équipé d'une articulation (3, 6) suivant les mouvements descendants du boîtier et dont une extrémité est liée à l'encadrement de la glace tandis que l'autre extrémité est équipée d'une manette de réglage (9), l'articulation (3, 6) pouvant coulisser par rapport au support (11) en direction d'une tige (1) du boîtier de réglage comportant la manette de réglage (9), caractérisé en ce que la tige (1) du tirant comportant la manette de réglage (9) est guidée axialement coulissable à travers une sphère (10) rotulée dans le support (11).

2. Rétroviseur extérieur suivant la revendication 1, caractérisé en ce que la tige (1) du tirant comportant la manette de réglage (9) est guidée sous légère friction dans la sphère (10).

3. Rétroviseur extérieur suivant la revendication 2, caractérisé en ce que la sphère (10) est pourvue d'un perçage (12) s'ouvrant vers les deux côtés pour recevoir la tige (1).

Fig.1